# EUROPEAN PATENT SPECIFICATION

(11) **EP 3 231 697 B1**
(45) Date of publication and mention of the grant of the patent: **25.04.2018**
(21) Application number: 17152880.5
(22) Date of filing: 24.01.2017
(51) Int. Cl.: B62M 3/00, B62H 5/10

(54) **LOCKING DEVICE FOR PEDAL VEHICLES**
VERRIEGELUNGSVORRICHTUNG FÜR PEDALFAHRZEUGE
DISPOSITIF DE VERROUILLAGE POUR VEHICULES A PEDALES

(30) Priority: 13.04.2016 IT UA20162570
(43) Date of publication of application: 18.10.2017
(73) Proprietor: Pracca, Marco, 20148 Milano (IT); Monteleone, Alfredo, 20149 Milano (IT); Glarey, Luigi, 20121 Milano (IT)
(72) Inventor: MONTELEONE, Alfredo, 20149 MILANO (IT)
(74) Representative: Brasca, Marco

(56) References cited:
- CZ-A3- 9 502 886
- JP-U- H 072 184
- US-A- 839 584
- US-A1- 2013 230 266

## Description

### Field of the invention

The present invention relates to a locking device for pedal vehicles, in particular for bicycles. The present invention relates to the field of mechanical systems adapted to block moving parts of a pedal vehicle so as to prevent and/or dissuade improper use and/or theft thereof. In particular, the present invention relates to a locking device for pedal vehicles configured for selectively blocking the movement of the pedals relative to the sleeve in which the central movement is mounted and therefore relative to the vehicle frame.

### Background of the invention

Published document DE19753024 illustrates an anti-theft locking system of bicycles. The system comprises a sleeve arranged internally of the central movement of the bicycle and provided with a radial recess. To block the rotation of the shaft of the bicycle, a security lock is included as well as a security key, by which a pin can slide radially internally of the radial recess. The sleeve is formed by two bushings which slide one inside the other and are realised separately in the housing of the bicycle frame bearings.

Other known solutions which illustrate pedal locking systems are illustrated in the following published documents: DE490863C, DE181310C, US839584A, EP0613814.

Also known is document US2013/0230266, which shows the preamble of claim 1 and illustrates a central movement provided with bearings installed in respective cup-shaped bodies on both sides of the central movement of the bicycle frame. Said cup-shaped bodies can be screwed together.

### Summary

In this context, the Applicants have noted the need for simplifying the structure of the systems/devices of known type so as to make them more safe, simpler, more reliable and less expensive. The Applicant has also noted the need to make the installation of the locking devices of the above-described type easier. whether factory installed or retro-fitted on the pedal vehicle.

The Applicants have in fact noted that the systems of known type are structurally very complex and the complexity thereof makes them structurally weak, easy to tamper with and difficult to install/de-install, if not by qualified personnel, also for reasons related to the different characteristics and dimensions of the central units present on the market.

In this context, the Applicants set themselves the following objectives:
- to make available a locking device for pedal vehicles, in particular for bicycles, which are structurally simple and relatively inexpensive;
- to make available a locking device that is sturdy when mounted as an assembly on the vehicle as well as in the single parts thereof;
- to make available a locking device that can be easily mounted and demounted to and from the pedal vehicle;
- to make available a locking device that is safe, i.e. difficult to tamper, if not by breaking the pedal vehicle sleeve and making the vehicle almost unusable;
- to make available a locking device that is safe, i.e. does not break during normal use of the pedal vehicle.

The Applicants have found that the above-indicated objectives and others besides can be attained by a locking device integrated in the central movement and formed by only three parts, as well as bearings, so that it can be simply and rapidly inserted in or de-inserted from the sleeve of the pedal vehicle.

More specifically, according to one independent aspect, the present invention relates to a locking device for pedal vehicles, comprising:
a first bushing configured to be mounted and secured to a first axial end of a sleeve hosting a central movement of the pedal vehicle;
a first bearing mounted in a first housing of the first bushing;
a second bushing configured to be mounted and secured to a second axial end of the sleeve;
a second bearing mounted in a second housing of the second bushing;
a cylindrical body which is an integral part of the first or second bushing and it is configured to be inserted into the sleeve, wherein the cylindrical body has a radial seat open radially at least towards the inside;
a shaft having opposite ends configured to be rigidly constrained to respective pedals, wherein the shaft is rotatably mounted in the first and second bushing and in the cylindrical body through the first and the second bearing;
a lock integrated into the shaft and provided with a respective key;
at least one pin at least partially housed in the shaft;
wherein said lock is operatively connected to the pin to move the pin radially between a radially retracted position, in which the pin lies outside of the radial seat, and a radially extracted position, in which the pin lies at least partially in the radial seat and prevents rotation of the shaft with respect to the cylindrical body and to the sleeve.

The cited three parts are: the first bushing, the second bushing (wherein one of the two bushings integrates the cylinder body) and the shaft. The shaft with the lock and the pin is a single block pre-mounted in the factory and must not be modified/demounted so as to be able to install/de-install the device on the pedal vehicle/from the pedal vehicle.

At least one between the first and the second housing is preferably open axially towards the outside to allow access of an operator (the final user of the vehicle or mechanic) to the respective bearing and enable axial insertion of the bearing or the extraction thereof.

Preferably, the bearing, once mounted in the respective housing, lies substantially flush with an end edge of the respective bushing. The end edge of the bushing preferably lies externally of the sleeve of the frame.

Preferably, the first and/or the second housing is/are axially external of the sleeve of the frame of the vehicle. The first and/or the second bearing is/are preferably axially external of the sleeve of the frame of the vehicle.

The bearing is therefore external of the assembly formed by the sleeve, the first and the second bushing and by the shaft. The bearing is accessible after having simply demounted the pedal in front of it. The bearing preferably remains in view, covered only by a possible dust cover.

The Applicants have verified that this structure enables easy mounting and demounting of the whole device, as it guarantees easy access to the bearings. The device can therefore be mounted and demounted without problems and without risking damaging the parts that make it up.

The shaft preferably has a diameter that is substantially constant along the whole axial extension thereof. The shaft preferably has a diameter that is smaller than an inner diameter of the first and second bushing and of the cylindrical body along the whole axial extension thereof.

The Applicants have verified that these characteristics enable mounting and demounting the device extremely easily. In particular, it is possible to extract the shaft from the sleeve after having demounted a pedal and extracted only one of the bearings.

The first and second bushing are preferably screwed on the sleeve. The threading of the first and of the second bushing are preferably opposite one another.

An axial end of the cylindrical body of the first bushing is preferably connected, preferably detachably, to the second bushing or vice versa. In this way the bushings and the cylindrical body form a continuous structure which internally covers the sleeve of the frame and on which the pin of the shaft engages.

Said axial end is preferably jointed in the respective bushing.

The cylindrical body preferably extends substantially for the whole length of the sleeve which hosts it.

Preferably, an access opening of the lock for the key is located on a first axial end of the shaft. The lock and the key are preferably of a security type.

The mentioned key can be mechanical but also electronic.

The mentioned key can be physically engaged to or be operatively connectable to the lock by means of a signal transmission.

In a preferred embodiment, the key is of the electronic type.

The electronic key is preferably of a contact type.

In a further embodiment the electronic key is in contactless or is configured for controlling the lock remotely.

The lock is preferably of an electronic type and comprises a transceiver (for example RFID, bluetooth, wireless IEEE 802.11 or via a mobile telephone standard, for example but not exclusively 3G or 4G), for dialoguing with an electronic key remotely. For example, the electronic lock is configured for dialoguing with an application present on an electronic device such as a smart-phone or a tablet or a PC and the electronic key is contained in and managed by said electronic device.

The shaft preferably has opposite ends that are knurled so as to engage with the pedals.

The shaft preferably further comprises a latching mechanism for a safety jack, in which said jack is constrained or constrainable to a safety chain wherein said latching mechanism is internal to the shaft. The safety jack is preferably constrained to a ring connected to the safety chain. The chain, of known type, enables for example tethering the pedal vehicle to a pole or another fixed element. The device of the invention therefore integrates, in the shaft, both the lock and the latching mechanism for the chain.

The jack preferably has an annular recess and the latching mechanism comprises latching members configured for inserting, preferably with a snap-fit, in said annular recess. The safety jack is preferably snap-fittable to the latching mechanism.

The shaft preferably has an auxiliary access opening in communication with the latching mechanism, in which said auxiliary access opening is configured for enabling the insertion of the safety jack and the engaging of said safety jack with the latching mechanism.

The latching mechanism is preferably operatively connected to the lock and is operable by means of said key. The key enables freeing said jack from said latching mechanism. The key therefore performs a double function, of locking/unlocking the pedals and of tethering or untethering the pedal vehicle. The auxiliary access opening is preferably placed on a second axial end of the shaft, opposite the first axial end. The key is insertable in the first axial end, while the jack is insertable in the second axial end of the shaft, opposite the first axial end.

The shaft preferably comprises a main transmission operatively interposed between the lock and the pin and configured for transforming the rotational motion of the key into a linear movement of the pin. The main transmission preferably comprises a cam member.

A spring is preferably positioned between the pin and a wall of the shaft for pushing the pin towards the extracted position. The action of the key is assisted by said spring during the blocking of the device.

The shaft preferably comprises an auxiliary transmission operatively interposed between the lock and the latching mechanism, for transforming the rotational motion of the key into a linear movement of the latching members.

Springs are preferably placed between the latching members and a wall of the shaft for pushing the latching members into the annular recess. The springs determine the latching of the safety jack. The key acts in opposition to said springs for extracting the latching members from the annular recess and enables release of the safety jack.

Preferably, the latching members comprise at least two jaws mobile between a radially contracted position, wherein the radially internal ends are inserted in the annular recess, and a radially dilated position, wherein the radially internal ends are external of the annular recess.

In an aspect, the present invention also relates to a pedal vehicle, preferably a bicycle, comprising a locking device according to what is described in the foregoing and/or according to what is claimed in the accompanying claims. Further characteristics and advantages will more fully emerge from the detailed description of a locking device for pedal vehicles installed in a sleeve of a bicycle.

### Description of the drawings

This description will be set out below with reference to the attached drawings, provided solely for indicative and therefore non-limiting purposes, in which:
figure 1 shows a view partially in section of a sleeve of a bicycle frame provided with a device according to the present invention;
figure 2 shows a schematic and section view of a shaft belonging to the device of the preceding figure;
figure 3 shows a partial view of the shaft of figure 2 in a different operating configuration;
figure 4 frontally shows a shaft element in the configuration of figure 2; and figure 5 shows the element of figure 4 in the configuration of figure 3.

### Detailed description

With reference to the mentioned figures, reference number 1 denotes in its entirety a locking device for pedal vehicles.

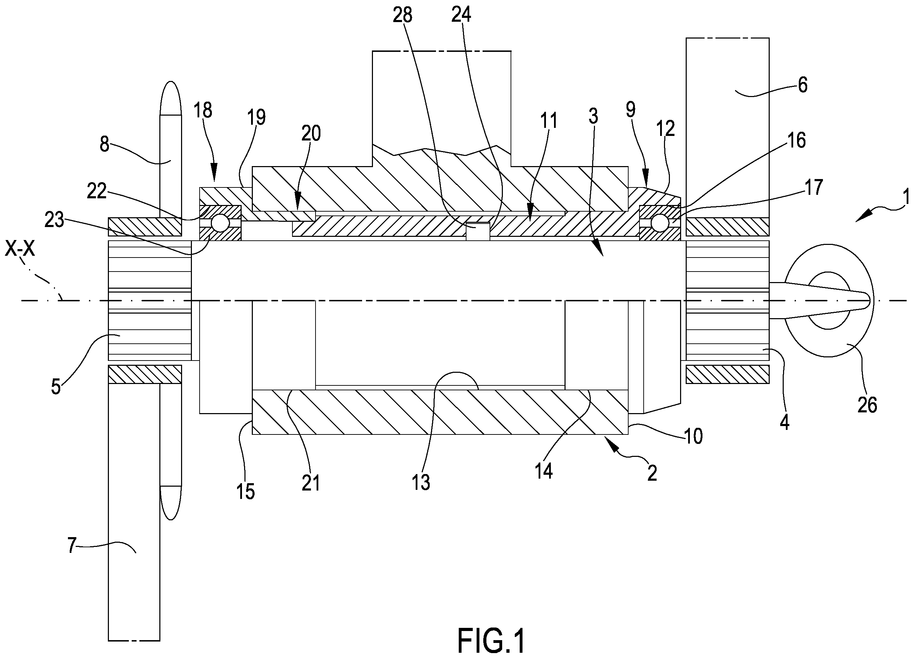

The figure 1 illustrates a sleeve 2 of a bicycle. The bicycle is of known type and therefore is not illustrated in its entirety.

The device 1 is a part of the central movement of the bicycle and comprises a shaft 3 which extends along a rotation axis "X-X" coaxial to the sleeve 2. The shaft 3 also has a first and a second end 4, 5 which are axially opposite one another. The opposite ends 4, 5 each have an external knurling and pedals 6 7 are mounted on them (the arms but not the cranks are visible) of the bicycle, which rotate solidly with the shaft 3. The second end 5 of the shaft 3 also bears at least a crown wheel 8 of the bicycle.

The shaft 3 has a cylindrical profile having a circular section with a substantially constant diameter.

The device 1 comprises a first bushing 9 configured to be mounted and secured to a first axial end 10 of the sleeve 2. In appended figure 1, the first bushing 9 forms a single piece, obtained for example by machining from a blank or by moulding, with a cylindrical body 11. The first bushing 9 has an annular portion 12 having a larger diameter than the internal seating 13 delimited by the sleeve 2 while the cylindrical body 11 has a slightly smaller diameter than said internal seat 13. The annular portion 12 has an abutment surface that is perpendicular to the rotation axis "X-X" and destined to enter into contact with the first axial end 10 of the sleeve 2 when the cylindrical body 11 is inserted in the internal seat 13 of the sleeve 2. In proximity of the abutment surface, the cylindrical body 11 has an external threading 14 which is engaged by screwing with a corresponding internal threading of the sleeve 2 so as to block the first bushing 9 and the cylindrical body 11 on the frame of the bicycle. In this configuration, the cylindrical body 11 extends internally of the internal seat 13 almost up to a second end 15 of the sleeve 2, axially opposite the first end 10.

The first bushing 9 delimits, at the annular portion 12, a first annular housing 16 that is coaxial to the rotation axis "X-X". The first housing 16 is axially open towards the outside, i.e. on the opposite side with respect to the sleeve 2. The first housing 16 hosts a first ball bearing 17. The annular portion 12 and the first bearing 17 remain external of the internal seat 13 of the sleeve 2 and the first bearing 17 remains visible from outside, unless covered by a dust cover, including when the device 1 is completely mounted. The first bearing 17, once mounted in the respective housing 16, lies substantially flush with an end edge of the respective first bushing 9.

The device 1 comprises a second bushing 18 configured to be mounted and secured to the second axial end 15 of the sleeve 2.

In appended figure 1, the second bushing 18 has an annular portion 19 with a larger diameter than the internal seat 13 and a cylindrical portion 20 having a diameter that is slightly smaller than said internal seat 13 and substantially identical to the diameter of the cylindrical body 11.

The annular portion 19 has an abutment surface that is perpendicular to the rotation axis "X-X" and destined to enter into contact with the second axial end 15 of the sleeve 2 when the cylindrical portion 20 is inserted in the internal seat 13 of the sleeve 2. In proximity of the abutment surface, the cylindrical portion 20 has an external threading 21 which is engaged by screwing with a corresponding internal threading of the sleeve 2 so as to block the second bushing 18 and the cylindrical portion 20 on the frame of the bicycle. In this configuration, the cylindrical portion 20 is unremovably joined, for example jointed, to an axial end of the cylindrical body 11. The threading of the first and second bushing 9, 18 are opposite one another.

The second bushing 18 delimits, at the annular portion 19 thereof, an annular second housing 22 that is coaxial to the rotation axis "X-X". The second housing 22 is axially open towards the outside, i.e. on the opposite side with respect to the sleeve 2. The second housing 22 hosts a second ball bearing 23. The annular portion 19 and the second bearing 23 remain external of the internal seat 13 of the sleeve 2. The second bearing 23, once mounted in the respective housing 22, lies substantially flush with an end edge of the respective second bushing 18.

The cylindrical body 11 has a radial seat 24 defined by a through-opening extending through a lateral wall of the cylindrical body 11. In the non-limiting illustrated embodiment, the radial seat 24 is located at about halfway along the axial length of the seat 13 of the sleeve 2.

The shaft 3 has a diameter that is smaller than an inner diameter of the first and second bushing 9, 18 and of the cylindrical body 11 along the whole axial extension thereof. The shaft 3 is mounted in the first and second bushing 9, 18 and in the cylindrical body 11 and is supported by the first and second bearing 17, 23 so as to be able to rotate about the rotation axis "X-X" with respect to the bushings 9, 18 and the cylindrical body 11 and therefore also with respect to the sleeve 2.

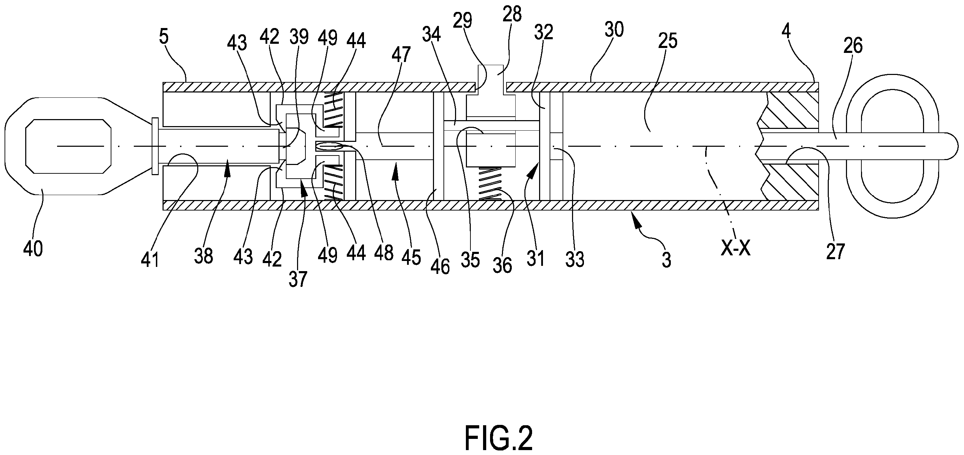

The shaft 3 is illustrated schematically but in any case in more detail in figure 2. The shaft 3 integrates, internally thereof, a security lock 25 (known and therefore illustrated only schematically) operable by means of a security key 26 inserted in an access opening 27 of the lock 25. The access opening 27 is placed on the first axial end 4 of the shaft 3.

The shaft 3 further hosts a pin 28 located at a halfway zone of the shaft 3. The pin 28 passes through a radial hole 29 afforded in a lateral wall 30 of the shaft 3.The lock 25 is operatively connected to the pin 28 so as to move it radially between a radially retracted position and a radially extracted position.

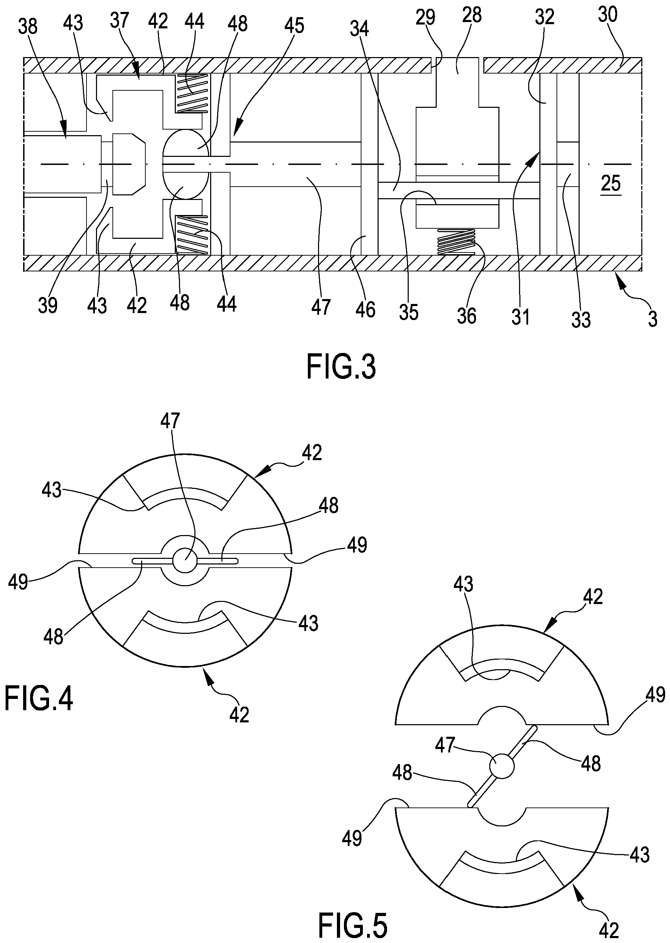

In the radially retracted position (figure 3) the pin 28 lies retracted internally of the shaft 3 or flush with the lateral wall 30 and outside the radial seat 24 of the cylindrical body 11. In this configuration, the shaft 3 is free to rotate in the sleeve 2.

In the radially extracted position (figure 2), the pin 28 projects radially from the lateral wall 30 and lies at least partly in the radial seat 24. In this configuration, the pin 28 prevents the rotation of the shaft 3 relative to the cylindrical body 11 and therefore relative to the sleeve 2. The pedals 6, 7 are thus blocked, i.e. they cannot rotate relative to the frame and cannot be used for operating the bicycle.

In the embodiment illustrated in figure 2, the shaft 3 comprises a main transmission 31 operatively interposed between the lock 25 and the pin 28 and configured for transforming the rotational motion of the key 26 in the linear and radial movement of the pin 28.

The main transmission 31 comprises a disc 32 solidly connected to the lock 25 by means of a spindle 33 that is coaxial to the rotation axis "X-X" and provided with a cam member 34, i.e. a shaft jointed to the disc 32 in a offset position with respect to the centre of said disc 32. The rod 34 is parallel to the rotation axis "X-X" and passes through a slot 35 fashioned in a base portion of the pin 28. The slot 35 is profiled in such a way that the rotation of the spindle 33, determined by the rotation of the key 26, determines, via the rotation of the disc 32 and an arched movement of the rod 34, a radial displacement of the pin 28.

A spring 36 is positioned between the pin 28 and a portion of the lateral wall 30 of the shaft 3 for pushing the pin 28 towards the extracted position. The action of the key 26 is assisted by the thrust of said spring 36 during the blocking of the device 1.

The shaft 3 further comprises a latching mechanism 37 for a safety jack 38. The safety jack 38 is of a known type, and has, at a terminal end thereof, an annular recess 39 and is connected with a security ring 40. The ring 40 is for example jointed or constrainable to a chain, to a lock or to another element adapted to constrain the jack 38, for example, to a pole or a grate. The latching mechanism 37 is located internally of the lateral wall 30 of the shaft 3.

An auxiliary access opening 41 (figure 2) is located on the second axial end 5 of the shaft 3 and is the communication with the latching mechanism 37. The auxiliary access opening 41 is configured for enabling inserting of the safety jack 38 and the engagement thereof with the latching mechanism 37.

In particular, the latching mechanism 37 comprises two latching members 42 defined by opposite jaws and radially mobile between a radially contracted position and a radially dilated position. In the radially contracted position (figure 2), the radially internal ends 43 of the jaws 42 are inserted in the annular recess 39 and axially retain the jack 38 internally of the auxiliary access opening 41 of the shaft 3. In the radially dilated position (figure 3) the radially internal ends 43 are external of the annular recess 39 and the jack 38 can be axially extracted from the auxiliary access opening 41.

A spring 44 is radially interposed between each of the jaws 42 and the lateral wall 30 of the shaft 3 so as to push the jaws 42 towards the radially contracted position of the annular recess 39. The above-mentioned springs 44 determine the snap-fitting of the safety jack 38. As is visible in figures 2 and 3, the above-mentioned radially internal ends 43 have a wedge profile for facilitating inserting of the safety jack 38 between the two jaws 42 and the radial dilation thereof before the snap-fit which determines the latching of the safety jack 38.

The latching mechanism 37 is operatively connected to the lock 25 and is operable by means of the security key 26. In particular, the rotation of the key 26 enables bringing the jaws 42 into the radially dilated position in opposition to the thrust exerted by the springs 44, so as to free the jack 38 from the latching mechanism 37.

For this purpose, the shaft 3 comprises an auxiliary transmission 45 operatively interposed between the lock 25 and the latching mechanism 37, for transforming the rotational motion of the key 26 into the linear and radial movement of the jaws 42.

The auxiliary transmission 45 comprises an auxiliary disc 46 connected to the cam rod 34 jointed to the auxiliary disc 46 in an offset position relative to the centre of said disc 46.An auxiliary spindle 47 coaxial to the rotation axis "X-X" extends from the auxiliary disc 46 on the opposite side with respect to the shaft 34. A distal end of said auxiliary spindle 47 bears two tabs or projections 48 which extend radially from the auxiliary spindle 47.

The projections 48 are located between the two jaws 42, in particular between two base portions 49 of the jaws 42. In the radially contracted position (figures 2 and 4), the two projections 48 lie parallel to and slightly distanced from the base portions 49. In the radially dilated position (figures 3 and 5), the two projections 48 are rotated and push the two jaws 42 distancingly in opposition to the springs 44. The key 26 therefore performs a double function, that of blocking/unblocking the pedals 6, 7 and that of tethering or untethering the bicycle by means of the safety jack 38.

The shaft 3 with the lock 25, the pin 28, the main transmission 31, the latching mechanism 37 and the auxiliary transmission 45 is a single block pre-mounted in the factory and does not have to be modified/demounted in order to install/de-install the device 1 on the bicycle.

In use, to mount the device 1 on the bicycle it is sufficient to demount the pedals 6, 7, the crown wheel 8 and the original central movement, mount the shaft 3 in the second bushing 18 with the second bearing 23, tighten the second bushing 18 into the sleeve 2. Thereafter, the first bushing 9, with the cylindrical body 11 and the first bearing 17, is inserted in the opposite side of the sleeve 2 and tightened while the pin 28 is in the retracted position. At this point the pedals 6, 7 are mounted together with the crown wheel 8. To block the rotation of the pedals 6, 7, it is sufficient to insert and rotate the key 26 so as to bring the pin into the cylindrical body 11.

To demount the device 1, for example for maintenance, it is sufficient to bring the pin 28 into the retracted position, demount the pedal 6 located by the side of the key 26, extract the first bearing 17 using an extractor, unscrew and extract the first bushing 9 and the cylindrical body 11, untighten and extract the second bushing 18 from the opposite side of the shaft 3.

## Claims

1. Locking device for pedal vehicles, comprising:
a first bushing (9) configured to be mounted and secured to a first axial end (10) of a sleeve (2) hosting a central movement of the pedal vehicle;
a first bearing (17) mounted in a first housing (16) of the first bushing (9);
a second bushing (18) configured to be mounted and secured to a second axial end (15) of the sleeve (2);
a second bearing (23) mounted in a second housing (22) of the second bushing (18);
a cylindrical body (11) which is an integral part of the first or second bushing (9, 18) and it is configured to be inserted into the sleeve (2), wherein the cylindrical body (11) has a radial seat (24) open radially at least towards the inside;
a shaft (3) having opposite ends (4, 5) configured to be rigidly constrained to respective pedals (6, 7), wherein the shaft (3) is rotatably mounted in the first and
second bushing (9, 18) and in the cylindrical body (11) through the first and the second bearing (17, 23); **characterized by** a lock (25) integrated into the shaft (3) and provided with a respective key (26);
at least one pin (28) at least partially housed in the shaft (3);
wherein said lock (25) is operatively connected to the pin (28) to move the pin radially between a radially retracted position, in which the pin (28) lies outside of the radial seat (24), and a radially extracted position, in which the pin (28) lies at least partially in the radial seat (24) and prevents rotation of the shaft (3) with respect to the cylindrical body (11) and to the sleeve (2);
wherein at least one between the first and the second housing (16, 22) is open axially towards the outside to allow access to the respective bearing (17, 23);
wherein the locking device further comprises a latching mechanism (37) for a safety jack (38), wherein said jack (38) is constrained or constrainable to a safety chain; wherein said latching mechanism (37) is internal to the shaft (3).

2. Device according to claim 1, wherein the first and / or the second housing (16, 22) is / are axially external to the sleeve (2) of the vehicle frame and wherein the first and / or the second bearing (17, 23) is / are axially external to the sleeve (2) of the vehicle frame.

3. Device according to claim 1 or 2, wherein the shaft (3) has a substantially constant diameter all along its axial extension and wherein the shaft (3) has a diameter smaller than an inner diameter of the first and second bushing (9, 18) and of the cylindrical body (11) all along its axial extension.

4. Device according to claim 1 or 2 or 3, wherein an axial end of the cylindrical body (11) of the first bushing (9) is connected, preferably detachably, to the second bushing (18) or vice versa and wherein the cylindrical body (11) extends substantially for the entire length of the sleeve (2) that houses it.

5. Device according to one of the preceding claims, wherein an access opening (27) of the lock (25) for the key (26) is placed on a first axial end (4) of the shaft (3).

6. Device according to claim 1, wherein the shaft (3) has an auxiliary access opening (41) in communication with the latching mechanism (37), for the insertion of the safety jack (38).

7. Device according to claim 1 or 6, wherein the latching mechanism (37) is operatively connected to the lock (25) and is operable by means of said key (26).

8. Device according to claim 7, wherein the safety jack (38) is snap fittable to the latching mechanism (37) and the key (26) allows to free said jack (38) from said latching mechanism (37) .

9. Device according to claim 6 or 7 or 8, wherein the auxiliary access opening (41) is placed on a second axial end (5) of the shaft (3), opposite to the first axial end (4).

## Patentansprüche

1. Verriegelungsvorrichtung für Pedalfahrzeuge, umfassend:
eine erste Buchse (9), welche dazu eingerichtet ist, an einem ersten axialen Ende (10) einer Hülse (2) montiert und gesichert zu sein, welche eine zentrale Bewegung des Pedalfahrzeugs beherbergt;
ein erstes Lager (17), welches in einem ersten Gehäuse (16) der ersten Buchse (9) montiert ist;
eine zweite Buchse (18), welche dazu eingerichtet ist, an einem zweiten axialen Ende (15) der Hülse (2) montiert und gesichert zu sein;
ein zweites Lager (23), welches in einem zweiten Gehäuse (22) der zweiten Buchse (18) montiert ist;
einen zylindrischen Körper (11), welcher ein integraler Teil der ersten oder zweiten Buchse (9, 18) ist und dazu eingerichtet ist, in die Hülse (2) eingesetzt zu sein, wobei der zylindrische Körper (11) einen radialen Sitz (24) aufweist, welcher radial wenigstens in Richtung der Innenseite offen ist;
eine Welle (3) mit gegenüberliegenden Enden (4, 5), welche dazu eingerichtet ist, steif an jeweiligen Pedalen (6, 7) gehalten zu sein, wobei die Welle (3) rotierbar in der ersten und zweiten Buchse (9, 18) und in dem zylindrischen Körper (11) durch das erste und zweite Lager (17, 23) montiert ist;
**gekennzeichnet durch**
ein Schloss (25), welches in die Welle (3) integriert und mit einem entsprechenden Schlüssel (26) bereitgestellt ist;
wenigstens einen Stift (28), welcher wenigstens teilweise in der Welle (3) aufgenommen ist;
wobei das Schloss (25) betriebsmäßig mit dem Stift (28) verbunden ist, um den Stift radial zwischen einer radial zurückgezogenen Position, in welcher der Stift (28) außerhalb des radialen Sitzes (24) liegt, und einer radial ausgezogenen Position, in welcher der Stift (28) wenigstens teilweise in dem radialen Sitz (24) liegt und eine Rotation der Welle (3) bezüglich des zylindrischen Körpers (11) und der Hülse (2) verhindert, zu bewegen;
wobei wenigstens eines aus dem ersten und dem zweiten Gehäuse (16, 22) axial in Richtung der Außenseite offen ist, um einen Zugang zu dem jeweiligen Lager (17, 23) zu erlauben;
wobei die Verriegelungsvorrichtung ferner einen Rastmechanismus (37) für eine Sicherheitsklemme (38) umfasst, wobei die Klemme (38) an einer Sicherheitskette gehalten oder halterbar ist; wobei der Rastmechanismus (37) intern zu der Welle (3) ist.

2. Vorrichtung nach Anspruch 1, wobei das erste und/oder zweite Gehäuse (16, 22) axial extern zu der Hülse (2) des Fahrzeugrahmens ist/sind und wobei das erste und/oder zweite Lager (17, 23) axial extern zu der Hülse (2) des Fahrzeugrahmens ist/sind.

3. Vorrichtung nach Anspruch 1 oder 2, wobei die Welle (3) einen im Wesentlichen konstanten Durchmesser entlang ihrer gesamten axialen Erstreckung aufweist, und wobei die Welle (3) einen Durchmesser aufweist, welcher kleiner als ein Innendurchmesser der ersten und zweiten Buchse (9, 18) und des zylindrischen Körpers (11) entlang seiner gesamten axialen Erstreckung ist.

4. Vorrichtung nach Anspruch 1 oder 2 oder 3, wobei ein axiales Ende des zylindrischen Körpers (11) der ersten Buchse (9), vorzugsweise lösbar, mit der zweiten Buchse (18) verbunden ist oder umgekehrt, und wobei sich der zylindrische Körper (11) im Wesentlichen über die gesamte Länge der Hülse (2) erstreckt, die ihn beherbergt.

5. Vorrichtung nach einem der vorhergehenden Ansprüche, wobei eine Zugangsöffnung (27) des Schlosses (25) für den Schlüssel (26) an einem ersten axialen Ende (4) der Welle (3) platziert ist.

6. Vorrichtung nach Anspruch 1, wobei die Welle (3) eine Hilfs-Zugangsöffnung (41) in Kommunikation mit dem Rastmechanismus (37) für das Einsetzen der Sicherheitsklemme (38) aufweist.

7. Vorrichtung nach Anspruch 1 oder 6, wobei der Rastmechanismus (37) betriebsmäßig mit dem Schloss (25) verbunden ist und mittels des Schlüssels (26) betätigbar ist.

8. Vorrichtung nach Anspruch 7, wobei die Sicherheitsklemme (38) schnapppassbar auf den Rastmechanismus (37) ist und der Schlüssel (26) es erlaubt, die Klemme (38) von dem Rastmechanismus (37) zu befreien.

9. Vorrichtung nach Anspruch 6 oder 7 oder 8, wobei die Hilfs-Zugangsöffnung (41) an einem zweiten axialen Ende (5) der Welle (3) gegenüber dem ersten axialen Ende (4) platziert ist.

## Revendications

1. Dispositif de verrouillage destiné à des véhicules à pédales, comprenant :
une première bague de réduction (9) configurée pour être montée et solidement fixée à une première extrémité axiale (10) d'un manchon (2) logeant un mouvement central du véhicule à pédales ;
un premier palier (17) monté dans un premier logement (16) de la première bague de réduction (9) ;
une seconde bague de réduction (18) configurée pour être montée et solidement fixée à une seconde extrémité axiale (15) du manchon (2) ;
un second palier (23) monté dans un second logement (22) de la seconde bague de réduction (18) ;
un corps cylindrique (11) qui constitue une partie intégrale de la première ou de la seconde bague de réduction (9, 18) et qui est configuré pour être inséré dans le manchon (2), le corps cylindrique (11) présentant une assise radiale (24) radialement ouverte au moins vers l'intérieur ;
un arbre (3) présentant des extrémités opposées (4, 5) configurées pour être contraintes de manière rigide aux pédales respectives (6, 7), l'arbre (3) étant monté de manière à pouvoir tourner dans la première et la seconde bague de réduction (9, 18) et dans le corps cylindrique (11) à travers le premier et le second palier (17, 23) ;
**caractérisé par**
un verrou (25) intégré dans l'arbre (3) et pourvu d'une clé respective (26) ; d'au moins une goupille (28) logée au moins partiellement dans l'arbre (3) ;
ledit verrou (25) étant relié de manière fonctionnelle à la goupille (28) pour déplacer la goupille de manière radiale entre une position radialement rétractée, dans laquelle la goupille (28) repose à l'extérieur de l'assise radiale (24), et une position radialement extraite, dans laquelle la goupille (28) repose au moins partiellement dans l'assise radiale (24) et empêche la rotation de l'arbre (3) par rapport au corps cylindrique (11) et au manchon (2) ;
au moins l'un entre le premier et le second logement (16, 22) étant ouvert axialement vers l'extérieur pour permettre l'accès au palier respectif (17, 23) ;
le dispositif de verrouillage comprenant en outre un mécanisme de blocage (37) destiné à un connecteur de sécurité (38), ledit connecteur (38) étant contraint ou pouvant être contraint à une chaîne de sécurité ; ledit mécanisme de blocage (37) étant interne vis-à-vis de l'arbre (3).

2. Dispositif selon la revendication 1, le premier et/ou le second logement (16, 22) étant axialement externes vis-à-vis du manchon (2) du châssis du véhicule et le premier et/ou le second palier (17, 23) étant axialement externes vis-à-vis du manchon (2) du châssis du véhicule.

3. Dispositif selon la revendication 1 ou 2, l'arbre (3) présentant un diamètre sensiblement constant tout le long de son extension axiale et l'arbre (3) ayant un diamètre inférieur au diamètre interne de la première et de la seconde bague de réduction (9, 18) et du corps cylindrique (11) tout le long de son extension axiale.

4. Dispositif selon la revendication 1 ou 2 ou 3, une extrémité axiale du corps cylindrique (11) de la première bague de réduction (9) étant connectée, préférablement de manière détachable, à la seconde bague de réduction (18) ou vice versa et le corps cylindrique (11) s'étendant sensiblement sur la longueur entière du manchon (2) qui l'accueille.

5. Dispositif selon l'une des revendications précédentes, une ouverture d'accès (27) du verrou (25) pour la clé (26) étant placée sur une première extrémité axiale (4) de l'arbre (3).

6. Dispositif selon la revendication 1, l'arbre (3) ayant une ouverture d'accès auxiliaire (41) en communication avec le mécanisme de blocage (37), pour l'insertion du connecteur de sécurité (38).

7. Dispositif selon la revendication 1 ou 6,
le mécanisme de blocage (37) étant fonctionnellement relié au verrou (25) et pouvant fonctionner à l'aide de ladite clé (26).

8. Dispositif selon la revendication 7, le connecteur de sécurité (38) étant ajustable par pression au mécanisme de blocage (37) et la clé (26) permettant de libérer ledit connecteur (38) dudit mécanisme de blocage (37).

9. Dispositif selon la revendication 6 ou 7 ou 8,
l'ouverture d'accès auxiliaire (41) étant placée sur une seconde extrémité axiale (5) de l'arbre (3), opposée à la première extrémité axiale (4).
